# EUROPEAN PATENT APPLICATION

(11) **EP 3 929 843 A1**
(43) Date of publication of application: **29.12.2021**
(21) Application number: 21181095.7
(22) Date of filing: 23.06.2021
(51) Int. Cl.: G06Q 10/10, G06Q 10/06, H04L 29/08

(54) **HARMONIZING DATA**

(30) Priority: 26.06.2020 FI 20205684
(71) Applicant: Infrakit Group Oy, 02150 Espoo (FI)
(72) Inventor: Hokkanen, Visa, 02150 Espoo (FI)
(74) Representative: Kolster Oy Ab

(57) **Abstract**

A server system, method and computer program product for receiving data from at least a first data source and a second data source, the first data source and the second data source being uninteroperable with each other, harmonizing the received data to be transmittable as harmonized data to a plurality of user devices, receiving a request from a user device to transmit data, the request comprising an indication of the data to be transmitted and identification information comprising at least a first user authentication data, determining, based on the indication of the data to be transmitted, harmonized data to be transmitted, and transmitting, after a successful verification of at least the first user authentication data, the harmonized data at least in part based on the request.

## Description

### TECHNICAL FIELD

The present application relates generally to harmonizing data. More specifically, the present application relates to harmonizing data and transmitting harmonized data.

### BACKGROUND

A plurality of operators may be involved in large projects such as different kinds of infrastructure projects. In a large project, a lot of information is available and needed, and therefore managing information may have an important role in a project.

### SUMMARY

Various aspects of examples of the invention are set out in the claims. The scope of protection sought for various embodiments of the invention is set out by the independent claims. The examples and features, if any, described in this specification that do not fall under the scope of the independent claims are to be interpreted as examples useful for understanding various embodiments of the invention.

According to a first aspect of the invention, there is provided a server system operatively connected with infrastructure construction operations for managing workflow relating to an infrastructure construction work site, the server system comprising means for performing: receiving data from at least a first data source and a second data source, the first data source and the second data source being uninteroperable with each other, harmonizing the received data to be transmittable as harmonized data to a plurality of user devices, receiving a request from a user device to transmit data, the request comprising an indication of the data to be transmitted and identification information comprising at least a first user authentication data, determining, based on the indication of the data to be transmitted, harmonized data to be transmitted, and transmitting, after a successful verification of at least the first user authentication data, the harmonized data at least in part based on the request.

According to a second aspect of the invention, there is provided a method for managing workflow relating to an infrastructure construction work site, the method comprising: receiving data from at least a first data source and a second data source, the first data source and the second data source being uninteroperable with each other, harmonizing the received data to be transmittable as harmonized data to a plurality of user devices, receiving a request from a user device to transmit data, the request comprising an indication of the data to be transmitted and identification information comprising at least a first user authentication data, determining, based on the indication of the data to be transmitted, harmonized data to be transmitted, and transmitting, after a successful verification of at least the first user authentication data, the harmonized data at least in part based on the request.

According to a third aspect of the invention, there is provided a computer program for managing workflow relating to an infrastructure construction work site, the computer program comprising instructions for causing a server system to perform at least the following: receiving data from at least a first data source and a second data source, the first data source and the second data source being uninteroperable with each other, harmonizing the received data to be transmittable as harmonized data to a plurality of user devices, receiving a request from a user device to transmit data, the request comprising an indication of the data to be transmitted and identification information comprising at least a first user authentication data, determining, based on the indication of the data to be transmitted, harmonized data to be transmitted, and transmitting, after a successful verification of at least the first user authentication data, the harmonized data at least in part based on the request.

According to a fourth aspect of the invention, there is provided a server system operatively connected with infrastructure construction operations for managing workflow relating to an infrastructure construction work site, the server system comprising at least one processor and at least one memory including computer program code, the at least one memory and the computer program code configured to with the at least one processor, cause the server system at least to: receive data from at least a first data source and a second data source, the first data source and the second data source being uninteroperable with each other, harmonize the received data to be transmittable as harmonized data to a plurality of user devices, receive a request from a user device to transmit data, the request comprising an indication of the data to be transmitted and identification information comprising at least a first user authentication data, determine, based on the indication of the data to be transmitted, harmonized data to be transmitted, and transmit, after a successful verification of at least the first user authentication data, the harmonized data at least in part based on the request.

According to a fifth aspect of the invention, there is provided a non-transitory computer readable medium comprising program instructions for managing workflow relating to an infrastructure construction work site, the non-transitory computer readable medium comprising program instructions for causing a server system to perform at least the following: receiving data from at least a first data source and a second data source, the first data source and the second data source being uninteroperable with each other, harmonizing the received data to be transmittable as harmonized data to a plurality of user devices, receiving a request from a user device to transmit data, the request comprising an indication of the data to be transmitted and identification information comprising at least a first user authentication data, determining, based on the indication of the data to be transmitted, harmonized data to be transmitted, and transmitting, after a successful verification of at least the first user authentication data, the harmonized data at least in part based on the request.

According to a sixth aspect of the invention, there is provided a computer readable medium comprising program instructions for managing workflow relating to an infrastructure construction work site, the non-transitory computer readable medium comprising program instructions for causing a server system to perform at least the following: receiving data from at least a first data source and a second data source, the first data source and the second data source being uninteroperable with each other, harmonizing the received data to be transmittable as harmonized data to a plurality of user devices, receiving a request from a user device to transmit data, the request comprising an indication of the data to be transmitted and identification information comprising at least a first user authentication data, determining, based on the indication of the data to be transmitted, harmonized data to be transmitted, and transmitting, after a successful verification of at least the first user authentication data, the harmonized data at least in part based on the request.

### BRIEF DESCRIPTION OF THE DRAWINGS

Some example embodiments will now be described with reference to the accompanying drawings:
Figure 1 shows a block diagram of an example apparatus in which examples of the disclosed embodiments may be applied;
Figure 2 shows a block diagram of another example apparatus in which examples of the disclosed embodiments may be applied;
Figure 3 illustrates an example signalling diagram incorporating aspects of the examples of the example embodiments; and
Figure 4 illustrates an example method according to an example embodiment of the invention.

### DETAILED DESCRIPTION OF THE DRAWINGS

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Example embodiments relate to a server system operatively connected with infrastructure construction operations for managing workflow relating to an infrastructure construction work site, the server system configured to receive data from at least a first data source and a second data source, the first data source and the second data source being uninteroperable with each other, harmonize the received data to be transmittable as harmonized data to a plurality of user devices, receive a request from a user device to transmit data, the request comprising an indication of the data to be transmitted and identification information comprising at least a first user authentication data, determine, based on the indication of the data to be transmitted, harmonized data to be transmitted, and transmit, after a successful verification of at least the first user authentication data, the harmonized data at least in part based on the request.

An infrastructure construction work site may comprise a geographical area in which an infrastructure construction project is carried out. An infrastructure construction work site may relate to building roads, bridges, buildings, railways, or the like. An infrastructure construction work site may comprise different operators from different companies and/or organizations that need to co-operate with each other, but it may be challenging to coordinate the infrastructure construction project when data relating to the infrastructure construction project is scattered in different systems in different formats.

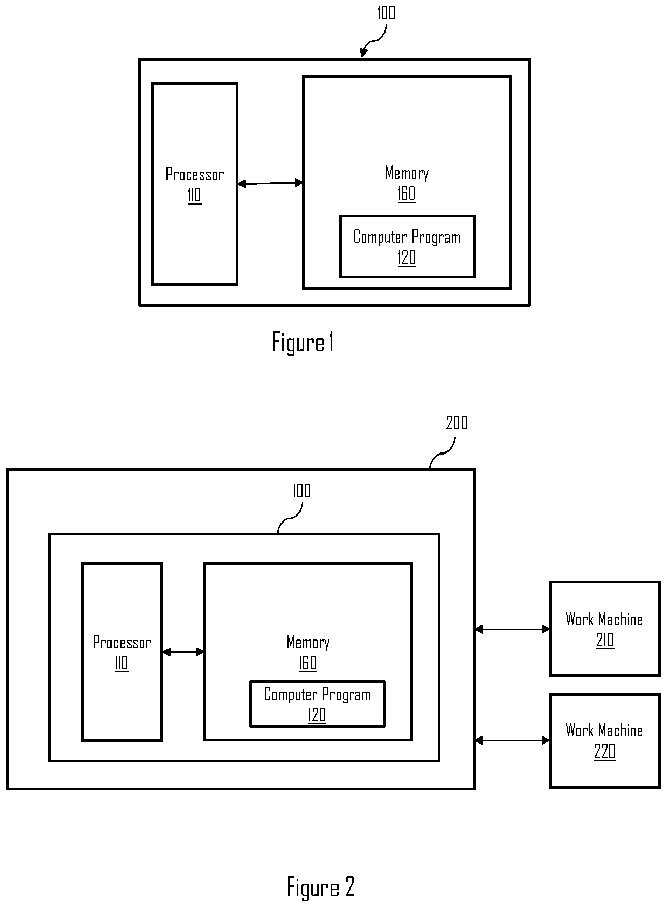

The example of Figure 1 shows an exemplifying apparatus.

Figure 1 is a block diagram depicting an apparatus 100 operating in accordance with an example embodiment of the invention. The apparatus 100 may be, for example, an electronic device such as a chip, chip-set, an electronic device, a computer or a server device. The apparatus comprises one or more control circuitry, such as at least one processor 110, and at least one memory 160, including one or more algorithms such as a computer program instructions 120 wherein the at least one memory 160 and the computer program instructions 120 are configured, with the at least one processor 110 to cause the apparatus 100 to carry out any of the example functionalities described below.

In the example of Figure 1, the processor 110 is a central unit operatively connected to read from and write to the memory 160. The processor 110 may also be configured to receive control signals received via an input interface and/or the processor 110 may be configured to output control signals via an output interface. In an example embodiment the processor 110 may be configured to convert the received control signals into appropriate commands for controlling functionalities of the apparatus.

The memory 160 stores computer program instructions 120 which when loaded into the processor 110 control the operation of the apparatus 100 as explained below. In other examples, the apparatus 100 may comprise more than one memory 160 or different kinds of storage devices.

Computer program instructions 120 for enabling implementations of example embodiments of the invention or a part of such computer program instructions may be loaded onto the apparatus 100 by the manufacturer of the apparatus 100, by a user of the apparatus 100, or by the apparatus 100 itself based on a download program, or the instructions can be pushed to the apparatus 100 by an external device. The computer program instructions may arrive at the apparatus 100 via an electromagnetic carrier signal or be copied from a physical entity such as a computer program product, a memory device or a record medium such as a Compact Disc (CD), a Compact Disc Read-Only Memory (CD-ROM), a Digital Versatile Disk (DVD) or a Blu-ray disk.

Figure 2 is a block diagram depicting an apparatus 200 in accordance with an example embodiment of the invention. In the example embodiment of Figure 2, the apparatus 200 is illustrated as comprising the apparatus 100. The apparatus 200 may comprise, for example, a server system configured to communicate with a plurality of separate systems and/or work machines relating to an infrastructure construction project.

The apparatus 200 is configured to communicate with a first data source and a second data source. In the example of Figure 2, the first data source comprises a first work machine 210 and the second data source comprises a second work machine 220.

According to an example embodiment, the apparatus 200 comprises a server system operatively connected with infrastructure construction operations for managing workflow relating to an infrastructure construction work site. A workflow relating to an infrastructure construction work site may comprise a sequence of tasks that process data relating to the infrastructure construction work site.

According to an example embodiment, the apparatus 200 comprises an information management system configured to provide information to and receive information from different systems and/or work machines relating to the infrastructure construction work site. The information may comprise information relating to initial data, design, construction, supervision and/or maintenance of the infrastructure construction work site.

According to an example embodiment, the apparatus 200 is configured to establish wireless communication with one or more devices. The one or more devices may comprise, for example, user devices, work machines and/or devices comprising one or more databases. According to an example embodiment, the one or more devices comprises one or more wireless devices.

According to an example embodiment, the apparatus 200 is configured to communicate with the plurality of user devices using a wireless connection. A wireless connection may comprise a direct wireless connection or an indirect wireless connection. For example, a direct wireless connection may comprise a connection in which the apparatus 200 and the plurality of wireless user devices are directly connected via a wireless connection. An indirect wireless connection may comprise a connection in which one or more user devices are wirelessly connected with, for example, a server that is connected with the apparatus 200 via a wired connection.

The apparatus 200 may be configured to receive information from a plurality of data sources. The information may comprise, for example, data relating to a data source collecting data on the infrastructure construction work site, a data source relating to planning the infrastructure construction work site, or the like. A data source may comprise, for example, a system providing data, a machine such as a work machine providing data, or a database comprising information relating to the infrastructure construction work site.

According to an example embodiment, the apparatus 200 is configured to connect different devices and/or data sources to the information system to enable collaboration between uninteroperable devices.

Uninteroperability between the first data source and the second data source may be caused by a lack of operative connection between the first data source and the second data source and/or lack of valid user authentication data between the first data source and the second data source. The lack of valid user authentication data may be, for example, caused by the first data source and the second data source belonging to different organizations, different technology vendors, or the like.

According to an example embodiment, the apparatus 200 comprises an information model relating to the infrastructure construction work site.

An information model relating to the infrastructure construction work site comprises a representation of the infrastructure construction work site including properties, relationships and the operations relating to the infrastructure construction work site. According to an example embodiment, an information model relating to the infrastructure construction work site comprises a digital information model of the infrastructure construction work site or a part of the infrastructure construction work site. A digital information model may comprise, for example, a three-dimensional (3D) model of the infrastructure construction work site.

Without limiting the scope of the claims, an advantage of a digital information model is that the information model may be available for a plurality of users at the same time and the project information is available on-line.

According to an example embodiment, the apparatus 200 is configured to receive data from at least a first data source and a second data source, the first data source and the second data source being uninteroperable with each other.

A data source may comprise an independent data source that provides one or more types of data. The one or more types of data may be construed as separate data sources. For example, assuming a work machine provides two types of data, the work machine may be construed as two separate data sources. As another example, a data source may comprise a common data source that provides data collected from a plurality of independent data sources. For example, a data source may comprise a database comprising data from a plurality of work machines. An independent data source may comprise a unit configured to provide data independent of other units.

A data source may comprise a hardware data source such as a physical device or a software data source such as a database, for example.

Data received from at least a first data source and the second data source may comprise different types of data. For example, data received from the first data source may comprise data of a first type and data received from the second data source may comprise data of a second type. As another example, data received from the first data source and the second data source may comprise data of a same type. Data received may comprise, for example, data or metadata relating to the infrastructure construction work site.

According to an example embodiment, data received from at least the first data source and the second data source comprises at least one of the following: position data, an operation mode relating to a machine, a task of a machine in progress, status of an authorized user or authorized user well-being data. For example, data received from the first data source may comprise position data and data received from the second data source may comprise availability data of an authorized user.

Position data may comprise an absolute position or a relative position of a data source or a user. An absolute position may comprise, for example, position coordinates of a geographical coordinate system such as the global positioning system (GPS). Relative position may comprise a position of the data source or the user relative to the work site, for example.

An operation mode relating to a machine may comprise information on how the machine is operated. An operation mode may comprise, for example, an autonomous mode, semi-autonomous mode, a mode relating to a machine that is operating, on hold, waiting, or the like.

A task of a machine in progress may comprise information on a task a machine is performing. Information on a task may comprise, for example, identification of a task such as a universally unique identifier (UUID), one or more characteristics of a task such as a rate of completion of a task, achieved quality properties of a task, as-built points connected to the task, or the like.

Status of an authorized user may comprise information relating to an availability of an authorized user. A status of the user may comprise, for example, "do not disturb", "on the phone", "available" or "busy". The status of the user may be determined based on the status of a user device the user is using.

A status of an authorized user may be used for receiving updated information on, for example, whether a user is available and/or working. A status of an authorized user may comprise information relating to a current status of the authorized user or future status of the authorized user. A future status of an authorized user may be determined based on calendar information associated with the authorized user or based on work plan or task queue. For example, a future status of an authorized user may indicate when the authorized user is available the next time.

Authorized user well-being data may comprise data measured by an activity monitor of a user. Authorized user well-being data may be used for determining whether safety regulations are complied with. For example, user well-being data may be used for determining sleepiness of an operator, detect driver drowsiness, determining whether an operator is complying with break rules in terms of having enough breaks.

According to an example embodiment, data received from any of at least the first data source and the second data source relate to at least one of the following: work related information on one or more authorized machines, work related information on one or more unauthorized machines, data relating to authorized personnel or data relating to unauthorized personnel.

Work related information on authorized and/or unauthorized machines may comprise, for example, a location of a machine, driving speed of a machine, driving direction of a machine, power such as a load or remaining energy of a machine, consumption of a machine, a working mode of a machine, a project a machine is working on, a current user of a machine, information relating work shifts of a user, information of a constructor, contact details of a constructor, a user or a supplier, or the like.

According to an example embodiment, the apparatus 200 is configured to update the information model in response to receiving data from any of the at least first data source and the second data source.

According to an example embodiment, the first data source is different from the second data source.

According to an example embodiment, the first data source comprises a first control system, planning system, tracking system, survey system, management system or measurement. According to an example embodiment, the second data source comprises a second control system, planning system, tracking system, survey system, management system or measurement.

The first data source may comprise a data source relating to a first work machine and the second data source may comprise a data source relating to a second work machine.

According to an example embodiment, the first data source and the second data source each comprise at least one of the following: a machine control or guidance system, a survey system, a schedule planning system, a mass haul tracking system, a mass haul planning system, a fleet management system, a design model tool, a stiffness or bearing measurement device, an evenness measurement device, terrain model data, geotechnical model data, bore hole data or aerial photo. For example, the first data source may comprise a machine control system and the second data source may comprise a schedule planning system. As another example, the first data source may comprise a fleet management system and the second data source may comprise a design model.

Data received from the first data source and the second data source may comprise authentication data authenticating the first data source and the second data source, respectively. In the following, authentication data authenticating the first data source is referred to as second authentication data and authentication data authenticating the second data source is referred to as third authentication data. Authentication data may comprise, for example, token-based authentication enabling users to obtain a token that allows them to access the apparatus 200 without using their username and password to authenticate every request. A token may comprise information identifying a particular data source and/or a user, and token validity. The token may be cryptographically signed. Token-based authentication may comprise creating tokens and/or delegating access. Token-based authentication may include one or more technologies, for example, JSON Web Tokens (JWT), Security Assertion Markup Language (SAML), OAuth 2.0, and/or User-Managed Access (UMA). A token may be valid for a predefined period of time such as 30 minutes or few days.

According to an example embodiment, the apparatus 200 comprises at least a first adapter for receiving data from the first data source comprising a second authentication data and a second adapter for receiving data from the second data source comprising a third authentication data.

The first adapter may be configured to adapt the format of the data received from the first data source into at least one format supported by the apparatus 200 and the second adapter may be configured to adapt the format of the data received from the second data source into the at least one format supported by the apparatus 200. A format supported by the apparatus 200 may comprise, for example, a file format. A file format may comprise a file format using web-based technologies such as different mark-up languages. For example, the at least one file format supported by the apparatus 200 may comprise an extensible mark-up language (XML) or geography mark-up language (GML). As another example, the at least one file format supported by the apparatus 200 may comprise a file format supporting two- or three-dimensional design data and/or metadata such as DWG, DXF and/or IFC.

According to an example embodiment, the data received from the first data source and the second data source comprises at least one of: real-time data and near real-time data. Real-time data may comprise data that is provided as it is acquired. For example, real-time data may be passed along as soon as it is gathered without storing it. However, real-time data may be stored in one or more places before a target destination of the real-time data is reached. Near real-time data may comprise data that is provided within a time interval from acquiring the data. The time interval may correspond to a delay between acquiring the data and providing the data caused by data processing and/or network transmission. The time interval may comprise, for example, from 1second to 30 minutes such as 10 seconds, 45 seconds, 3 minutes, 15 minutes, 20 minutes or 25 minutes in an infrastructure construction project.

According to an example embodiment, the apparatus 200 is configured to harmonize the received data to be transmittable as harmonized data to a plurality of user devices. A user device may comprise, for example, a mobile computing device such as a mobile phone, a personal digital assistant (PDA), a tablet device, a smartwatch, augmented or virtual reality glasses, or the like. According to an example embodiment, a user device comprises a mobile computing device.

Harmonizing data may comprise transforming the received data into a predefined format. The predefined format may comprise a format that allows integration and/or analysis of data from a plurality of data sources. Harmonizing data may further comprise extracting data from the received data and/or loading data into a destination. Harmonizing may be performed by one or more adapters such as the first adapter configured to receive data from the first data source and the second adapter configured to receive data from the second data source. As another example, the apparatus 200 may comprise a separate entity or a module for harmonizing data.

According to an example embodiment, harmonizing data comprises processing and combining data received from at least the first data source and the second data source.

Harmonizing data may additionally or alternatively comprise, for example, performing one or more mathematical operations such as scaling, interpolation and/or extrapolation. As another example, harmonizing data may comprise associating metadata with the received data and/or grouping data.

According to an example embodiment, the apparatus 200 is configured to receive a request from a user device to transmit data, the request comprising an indication of the data to be transmitted and identification information comprising at least a first user authentication data.

According to an example embodiment, the first user authentication data comprises data authenticating the user device and/or the user of the user device requesting the data.

Data to be transmitted may comprise, for example, data relating to any data source, measurement data or one or more documents relating to the infrastructure construction work site.

According to an example embodiment, the indication of the data to be transmitted further comprises indication of a format of the harmonized data to be transmitted. The format of the harmonized data may comprise, for example, a format complying with an operation system such as Android or iOS, for example.

According to an example embodiment, the indication of the data to be transmitted further comprises information regarding the user device and peripheral devices of the user device thereon to transmit the harmonized data to.

Information regarding the user device and peripheral devices may comprise, for example, information on one or more characteristics of the user devices and/or peripheral devices, The one or more characteristics may comprise, for example, capabilities of the user device/peripheral devices such as a screen size of the user device/peripheral devices, storage size of the user device/peripheral devices, processing power of the user device/peripheral devices, battery level of the user device/peripheral devices, or the like.

As another example, information regarding the user device and peripheral devices may comprise, for example, information on a type of the user device and/or peripheral devices. A type of the user device and/or peripheral devices may comprise, for example, a standalone device such as a smartphone or an accessory device such as a headphone or a smartwatch. Information on a type of the user device and/or peripheral devices may enable customizing the data to be transmitted based on the type of the user device. Customizing the data to be transmitted may comprise, for example, modifying data, supplementing data and/or deducting data. For example, assuming information regarding the user device comprises an indication that the user device is a headset, data to be provided to the headset may be supplemented with an audible notification that a user should also check additional information on a screen of a device associated with the headset.

As a further example, information regarding the user device and peripheral devices may comprise, for example, information on an active user device and/or peripheral devices. An active user device and/or peripheral devices may comprise a device that active when the data is transmitted. An active device may comprise a device that is capable of receiving data such as a device that is powered on, connected to the internet and/or radio network, or the like.

Without limiting the scope of the claims, an advantage of the indication of the data comprising information regarding the user device and peripheral devices of the user device is that data to be transmitted may be selected based on characteristics of the user device and/or peripheral devices. Another advantage is that the data may be transmitted to a device considered as the most suitable device for viewing data. For example, pictures may be transmitted to a device having the biggest screen or time critical data may be transmitted to a device having the fastest internet connection. A further advantage is that data may be transmitted to a device that is on-line. A further advantage considering the user device and/or peripheral devices capabilities and request is that data may be provided for a user in a manner suitable for the user thereby enabling good user experience.

According to an example embodiment, the apparatus 200 is configured to select the format of the harmonized data based on a type of the user device and peripheral devices thereon to transmit the harmonized data to. A request may comprise a dedicated request to transmit data or, for example, a request to authenticate the user device. The request may be a one-time request, a request valid for a predetermined period of time or a request valid until the request is invalidated.

The request may be received, for example, from a mobile application in the user device. The request may be received in response to authenticating the mobile application, in response to activating the mobile application, in response to selecting information presented by the mobile application and/or in response to refreshing information presented by the mobile application.

According to an example embodiment, the apparatus 200 is configured to determine, based on the indication of the data to be transmitted, harmonized data to be transmitted. The indication of the data to be transmitted may comprise an identification of an object to which the data to be transmitted relates.

According to an example embodiment, the apparatus 200 is configured to adapt the format of the data to be transmitted based on a type of the user device.

According to an example embodiment, the apparatus 200 is configured to transmit, after a successful verification of the at least the first user authentication data, the harmonized data at least in part based on the request.

According to an example embodiment, transmitting the harmonized data to the user device comprises adapting the harmonized data based on the request.

Adapting the harmonized data based on the request may comprise adapting the harmonized data based on information associated with the request. Information associated with the request may comprise, for example, information relating to a user device from which the request is received and/or contents of the request. Information relating to a user device may comprise information relating to characteristics and/or properties of the user device such as a type of the user device and/or capabilities of the user device. Information on content of the request may comprise, for example, a level of detail for providing the harmonized data.

Adapting the harmonized data may comprise prioritizing data to be transmitted and/or selecting the most relevant data for transmitting. Data may be prioritized and/or selected based on a type of the requested data, based on characteristics of a user device requesting the data, based on a work phase to which the data relates, or the like.

According to an example embodiment, the apparatus 200 comprises means for performing features of the apparatus 200, wherein the means for performing comprises at least one processor 110, at least one memory 160 including computer program code 120, the at least one memory 160 and the computer program code 120 configured to, with the at least one processor 110, cause the performance of the apparatus 200. The means for performing features of the apparatus 200 may comprise, for example, means for receiving data from at least a first data source and a second data source, the first data source and the second data source being uninteroperable with each other, means for harmonizing the received data to be transmittable as harmonized data to a plurality of user devices, means for receiving a request from a user device to transmit data, the request comprising an indication of the data to be transmitted and identification information comprising at least a first user authentication data, means for determining, based on the indication of the data to be transmitted, harmonized data to be transmitted, and means for transmitting, after a successful verification of at least the first user authentication data, the harmonized data at least in part based on the request.

The apparatus 200 may further comprise means for updating a information model in response to receiving data from any of the at least the first data source or the second data source, means for selecting a format of the harmonized data based on a type of the user device and peripheral devices thereon to transmit the harmonized data to and/or means for causing the apparatus to communicate with the a plurality of user devices using a wireless connection. A wireless connection may comprise a direct wireless connection or an indirect wireless connection.

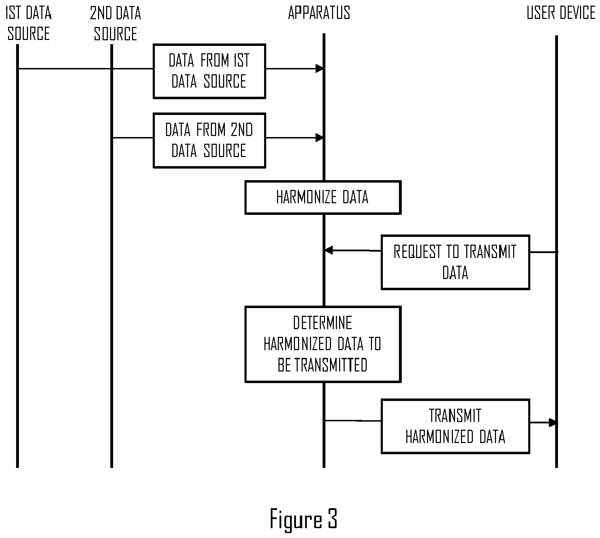

Figure 3 illustrates an example signalling diagram depicting an example embodiment. The apparatus of Figure 3 comprises the apparatus 200 comprising server system.

The apparatus 200 receives data from at least a first data source and a second data source, the first data source and the second data source being uninteroperable with each other.

Uninteroperability between the first data source and the second data source may be caused by a lack of operative connection between the first data source and the second data source and/or lack of valid user authentication data between the first data source and the second data source. The lack of valid user authentication data may be, for example, caused by the first data source and the second data source belonging to different organizations, different technology vendors, or the like.

The apparatus 200 harmonizes the received data to be transmittable as harmonized data to a plurality of user devices. Harmonizing data comprises processing and combining data received from at least the first data source and the second data source. For example, harmonizing data may comprise transforming the received data into a predefined format.

The apparatus 200 receives a request from a user device to transmit data, the request comprising an indication of the data to be transmitted and identification information comprising at least a first user authentication data. The indication of the data to be transmitted may comprise, for example, an indication of a format of the harmonized data to be transmitted.

The user device may comprise, for example, a mobile computing device such as a mobile phone, a personal digital assistant (PDA), a tablet device, augmented or virtual reality glasses, or the like.

The apparatus 200 determines, based on the indication of the data to be transmitted, harmonized data to be transmitted. Data to be transmitted may comprise, for example, measurement data or one or more documents relating to the infrastructure construction work site.

The apparatus 200 transmits, after a successful verification of at least the first user authentication data, the harmonized data to the user device at least in part based on the request.

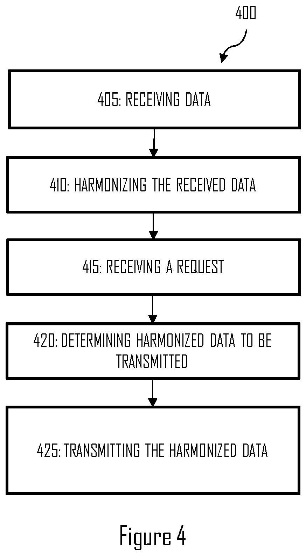

Figure 4 illustrates an example method 400 incorporating aspects of the previously disclosed embodiments. More specifically the example method 400 illustrates transmitting harmonized data. The method may be performed by the apparatus 200.

The method starts with receiving 405 data from at least a first data source and a second data source, the first data source and the second data source being uninteroperable with each other.

Uninteroperability between the first data source and the second data source may be caused by a lack of operative connection between the first data source and the second data source and/or lack of valid user authentication data between the first data source and the second data source. The lack of valid user authentication data may be, for example, caused by the first data source and the second data source belonging to different organizations, different technology vendors, or the like.

The method continues with harmonizing 410 the received data to be transmittable as harmonized data to a plurality of user devices. Harmonizing data comprises processing and combining data received from at least the first data source and the second data source.

The method further continues with receiving 415 a request from a user device to transmit data, the request comprising an indication of the data to be transmitted and identification information comprising at least a first user authentication data. The indication of the data to be transmitted may comprise, for example, an indication of a format of the harmonized data to be transmitted.

The method further continues with determining 420, based on the indication of the data to be transmitted, harmonized data to be transmitted. Data to be transmitted may comprise, for example, measurement data or one or more documents relating to the infrastructure construction work site.

The method further continues with transmitting 425, after a successful verification of at least the first user authentication data, the harmonized data to the user device at least in part based on the request.

Without limiting the scope of the claims, an advantage of a server system configured to harmonize received data and transmit the harmonized data is that information may be shared in a centralized manner even if the systems providing and/or requesting data might be uninteroperable with each other. Another advantage is that different machine operators may have up-to-date information on an infrastructure work site, for example. A further advantage is that different stakeholders may access data online using different kinds of devices.

Without in any way limiting the scope, interpretation, or application of the claims appearing below, a technical effect of one or more of the example embodiments disclosed herein is improved control and monitoring of an infrastructure construction work site. Another technical effect may be improved cycle times and quality, and reduction in costs and emissions.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer-readable medium' may be any media or means that can contain, store, communicate, propagate or transport the instructions for use by or in connection with an instruction execution system, apparatus, or device, such as a computer, with one example of a computer described and depicted in FIGURE 2. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It will be obvious to a person skilled in the art that, as the technology advances, the inventive concept can be implemented in various ways. The invention and its embodiments are not limited to the examples described above but may vary within the scope of the claims.

## Claims

1. A server system operatively connected with infrastructure construction operations for managing workflow relating to an infrastructure construction work site, the server system comprising means for:
receiving data from at least a first data source and a second data source, the first data source and the second data source being uninteroperable with each other;
harmonizing the received data to be transmittable as harmonized data to a plurality of user devices;
receiving a request from a user device to transmit data, the request comprising an indication of the data to be transmitted and identification information comprising at least a first user authentication data;
determining, based on the indication of the data to be transmitted, harmonized data to be transmitted; and
transmitting, after a successful verification of at least the first user authentication data, the harmonized data at least in part based on the request.

2. The server system according to claim 1, wherein at least the first data source and the second data source each comprise at least one of the following: a machine control or guidance system, a survey system, a schedule planning system, a mass haul tracking system, a mass haul planning system, a fleet management system, a design model tool, a stiffness or bearing measurement device, an evenness measurement device, terrain model data, geotechnical model data, bore hole data or aerial photo.

3. The server system according to claim 1 or 2, wherein the server system comprises an information model relating to the infrastructure construction work site and wherein to the server system further comprises means for updating the information model in response to receiving data from any of the at least the first data source or the second data source.

4. The server system according to any one of the preceding claims, wherein the server system comprises at least a first adapter for receiving data from the first data source comprising a second authentication data and a second adapter for receiving data from the second data source comprising a third authentication data.

5. The server system according to any one of the preceding claims, wherein the data received from the first data source and the second data source comprises at least one of: real-time data and near real-time data.

6. The server system according to any one of the preceding claims, wherein the data received from at least the first data source and the second data source comprises at least one of the following: position data, an operation mode relating to a machine, a task of a machine in progress, status of an authorized user or authorized user well-being data.

7. The server system according to any one of the preceding claims, wherein the data received from any of at least the first data source and the second data source relate to at least one of the following: work related information on one or more authorized machines, work related information on one or more unauthorized machines, data relating to authorized personnel or data relating to unauthorized personnel.

8. The server system according to any one of the preceding claims, wherein harmonizing data comprises processing and combining data received from at least the first data source and the second data source.

9. The server system according to any one of the preceding claims, wherein the indication of the data to be transmitted further comprises indication of a format of the harmonized data to be transmitted.

10. The server system according to any one of the preceding claims, wherein the indication of the data to be transmitted further comprises information regarding the user device and peripheral devices of the user device thereon to transmit the harmonized data to and the server system further comprises means for selecting the format of the harmonized data based on a type of the user device and peripheral devices thereon to transmit the harmonized data to.

11. The server system according to any one of the preceding claims, wherein transmitting the harmonized data to the user device comprises adapting the harmonized data based on the request.

12. The server system according to any one of the preceding claims, wherein the server system further comprises means for communicating with a plurality of user devices using a wireless connection.

13. The server system according to any one of the preceding claims, wherein a user device comprises a mobile computing device.

14. A method for managing workflow relating to an infrastructure construction work site, the method comprising:
receiving data from at least a first data source and a second data source, the first data source and the second data source being uninteroperable with each other;
harmonizing the received data to be transmittable as harmonized data to a plurality of user devices;
receiving a request from a user device to transmit data, the request comprising an indication of the data to be transmitted and identification information comprising at least a first user authentication data;
determining, based on the indication of the data to be transmitted, harmonized data to be transmitted; and
transmitting, after a successful verification of at least the first user authentication data, the harmonized data at least in part based on the request.

15. A computer program comprising instructions for managing workflow relating to an infrastructure construction work site, the computer readable medium comprising instructions for causing a server system to perform at least the following:
receiving data from at least a first data source and a second data source, the first data source and the second data source being uninteroperable with each other;
harmonizing the received data to be transmittable as harmonized data to a plurality of user devices;
receiving a request from a user device to transmit data, the request comprising an indication of the data to be transmitted and identification information comprising at least a first user authentication data;
determining, based on the indication of the data to be transmitted, harmonized data to be transmitted; and
transmitting, after a successful verification of at least the first user authentication data, the harmonized data at least in part based on the request.
